# EUROPÄISCHE PATENTSCHRIFT

(11) **EP 1 430 242 B1**
(45) Veröffentlichungstag und Bekanntmachung des Hinweises auf die Patenterteilung: **25.05.2005**
(21) Anmeldenummer: 02769938.8
(22) Anmeldetag: 13.09.2002
(51) Int. Cl.: F16J 15/16, F16J 15/32

(54) **HOCHDRUCKDICHTUNGSANORDNUNG**
HIGH-PRESSURE SEALING ASSEMBLY
SYSTEME D'ETANCHEITE HAUTE PRESSION

(30) Priorität: 18.09.2001 DE 10145914
(43) Veröffentlichungstag der Anmeldung: 23.06.2004
(73) Patentinhaber: Busak + Shamban Deutschland GmbH, 70565 Stuttgart (DE)
(72) Erfinder: JORDAN, Holger, 73765 Neuhausen a.d.F. (DE)
(74) Vertreter: Kohler Schmid Möbus
(86) Internationale Anmeldenummer: PCT/DE2002/003400
(87) Internationale Veröffentlichungsnummer: WO 2003/027545

(56) Entgegenhaltungen:
- DE-A- 4 140 833
- DE-A- 19 907 883
- DE-A- 19 953 925
- US-A- 3 663 024
- US-A- 4 917 390

## Beschreibung

Die Erfindung betrifft eine Hochdruckdichtungsanordnung zum Abdichten eines Spalts zwischen zwei zueinander konzentrischen, gegeneinander beweglichen Maschinenteilen, von denen ein erstes Maschinenteil eine Nut und zweites Maschinenteil eine der Nut gegenüberliegende Außenumfangsfläche aufweist.

### Stand der Technik

Eine derartige Hochdruckdichtungsanordnung ist beispielsweise durch die DE-OS 43 23 266 A1 bekannt geworden. Auch sind derartige Dichtungsanordnungen durch die DE 41 40 833 A1, die DE 199 53 925 A1 und die US 4 917 390 bekannt geworden.

Die bekannte Anordnung zum Abdichten eines Spalts zwischen zwei zueinander konzentrischen, gegeneinander beweglichen Maschinenteilen weist in der Nut einen Dichtring auf, der ortsfest im Maschinenelement montiert ist. Der Dichtring ist gegenüber radial und axial auf den Dichtring wirkenden Kräften flexibel. Die druckabhängigen Verformungen des Dichtrings sind reversibel, d.h., bei fallendem Fluiddruck an der Hochdruckseite bildet sich der Dichtring selbständig in seine Ausgangsprofilierung zurück. Die Dichtfläche bzw. Dichtkante kann druckentlastet werden.

### Aufgabe der Erfindung

Der Erfindung liegt die Aufgabe zugrunde, die bekannte Dichtungsanordnung derart weiterzubilden, daß das Reibkraft- und Extrusionsverhalten im Bereich der dynamischen Abdichtung weiter verbessert wird.

### Gegenstand und Vorteile der Erfindung

Diese Aufgabe wird durch eine Hochdruckdichtungsanordnung gelöst, bei der in der Nut ein Dichtring aus einem extrusionsfesten Material und ein Spannring aus einem elastomeren Werkstoff vorgesehen sind, wobei ein niederdruckseitiger Profilbereich des Dichtrings unter Fluiddruckbeaufschlagung zur Außenumfangsfläche auslenkbar ist, wobei sich die druckabhängige Auslenkung des Dichtrings bei einer Druckerniedrigung selbsttätig in Richtung der Ausgangslage des Dichtrings im drucklosen Zustand zurückbildet, wobei der Dichtring - im Querschnitt und im drucklosen Zustand gesehen - eine profilierte der Außenumfangsfläche zugewandte Dichtringfläche aufweist, welche zumindest bezüglich des niederdruckseitigen Profilbereichs in eine von der Außenumfangsfläche beabstandete Absatzfläche mit einem ersten Abstand d₁ übergeht, welche wiederum in eine von der Außenumfangsfläche stärker beabstandete Absatzfläche Seitenfläche mit einem zweiten Abstand d₂ übergeht und wobei eine mehrstufige Dichtringfläche ausgebildet ist, welche bei Hochdruckbelastung nach Verschwenken des Dichtrings auf der Außenumfangsfläche unter Ausbildung eines Ringraums aufsetzen kann.

Die Profilierung der Dichtringfläche kann zackenartig, wellenartig oder treppenartig ausgestaltet sein. Die Dichtringfläche weist einen Stützfuß oder einen Stützabschnitt mit der vorgespannten Dichtfläche auf. Dies bewirkt eine Abdichtung bei niederen Fluiddrücken. Bei höherer Druckbeaufschlagung verkippt der Stützfuß oder Stützabschnitt und die Dichtfläche wird druckentlastet, eine Kante, Stufe oder Vorsprung mit einer kantigen oder runden Ausbildung an der niederdruckseitigen Absatzfläche setzt auf und wird zu einer Dichtkante oder Dichtfläche. Es findet somit eine verbesserte Druckentlastung der an der Außenumfangsfläche des zweiten Maschinenteils anliegenden Dichtringelemente statt. Der Dichtring ist aus einem gegenüber dem Spannring härteren Material mit einem größeren E-Modul hergestellt. Der Kern der Erfindung wird in der Wahl der Werkstoffe und der mehrstufigen Dichtringfläche im Bereich der Außenumfangsfläche des zweiten Maschinenteils gesehen. Diese mehrstufige Dichtringfläche kann nach Verschwenken des Dichtrings auf der Außenumfangsfläche aufsetzen. Die Reibung verringert sich dadurch bei Rotation und Translation des zweiten Maschinenteils.

Bevorzugt ist der Dichtring symmetrisch ausgebildet. Die druckabhängige Auslenkung des Dichtrings bildet sich bei einer Druckerniedrigung selbsttätig in Richtung der Ausgangslage des Dichtrings im drucklosen Zustand zurück, wobei der Dichtring - im Querschnitt und im drucklosen Zustand gesehen - eine profilierte der Außenumfangsfläche zugewandte Dichtringfläche aufweist, welche beidseitig stufenförmig in zwei von der Außenumfangsfläche beabstandete Absatzflächen übergeht, die wiederum über mindestens eine Kante in Seitenflächen übergehen.

Bei einer Weiterbildung der Erfindung gehen die Absatzflächen über quer zur Außenumfangsfläche verlaufende Schrägflächen in die Seitenflächen über. Es bildet sich jeweils zur Hochdruckseite und zur Niederdruckseite ein Keilspalt aus. Die hochdruckseitige Schrägfläche kann bei Druckbeaufschlagung vom Fluid untergriffen werden und ein Verschwenken des Dichtrings unterstützen.

Die erfindungsgemäße Hochdruckdichtungsanordnung kann für Drehdurchführungen in der Hydraulik verwendet werden.

### Zeichnung

Ein Ausführungsbeispiel der erfindungsgemäßen Dichtungsanordnung ist in der schematischen Zeichnung dargestellt und wird in der nachfolgenden Beschreibung erläutert. Die Gegenstände der einzelnen Figuren und Abschnitte der Dichtungsanordnung sind teilweise stark vergrößert und überzogen stark verformt dargestellt, damit die Funktionsweise der Dichtungsanordnung besser ersichtlich ist. Es zeigt:
- **Fig. 1**: eine Dichtungsanordnung im Querschnitt ohne oder bei geringer Druckbeaufschlagung;
- **Fig. 2**: die Dichtungsanordnung nach Fig.1 bei Hochdruckbeaufschlagung.

### Beschreibung des Ausführungsbeispiels

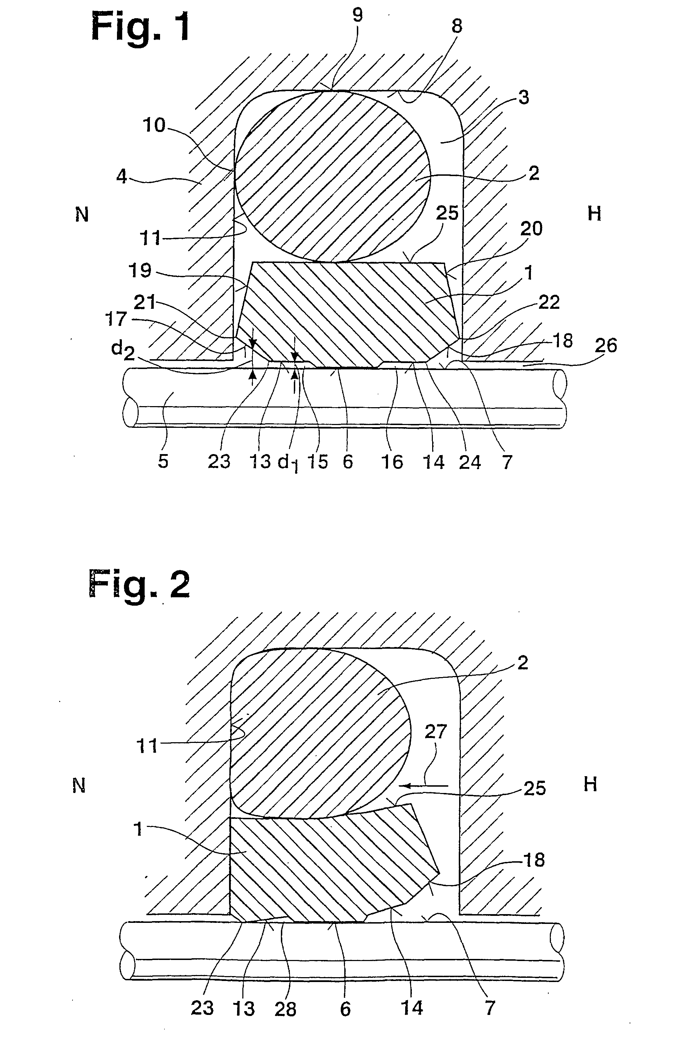

**Fig. 1** zeigt einen Dichtring 1 aus einem extrusionsfesten steifen Material, wie Polyurethan oder ähnlichen Materialien, und einen Spannring 2 aus einem elastomeren Werkstoff. Der Dichtring 1 und der Spannring 2 sind in einer Nut 3 eines ersten Maschinenteils 4 eingebaut, das einem rotierbaren zweiten Maschinenteil 5 gegenüberliegend angeordnet ist. Der Dichtring 1 und der Spannring 2 weisen zusammen gegenüber der Nut 3 ein Übermaß auf. Werden der Dichtring 1 und der Spannring 2 in die Nut 3 eingebracht, so wird eine Dichtfläche 6 eines Stützfußes oder Stützabschnitts an eine Außenumfangsfläche 7 des zweiten Maschinenteils 5 angedrückt, damit die Interferenz im statischen Abdichtungsbereich abgebaut werden kann. In der in Fig. 1 gezeigten Einbaulage ist der Spannring 2 am Nutgrund 8 vorgespannt und liegt über Berührungslinien 9 und 10 am Nutgrund 8 und einer niederdruckseitigen Nutflanke 11 an. Die Berührungslinien 9 und 10 haben die Funktion statisch wirkender Dichtkanten.

In der Fig. 1 ist mit H die Hochdruckseite gekennzeichnet und mit N die Niederdruckseite. In der Fig. 1 ist der Dichtring fluidniederdruckbeaufschlagt. Der Dichtring 1 weist eine im wesentlichen trapezförmige Querschnittsform auf, wobei die der Außenumfangsfläche 7 zugewandte Dichtringseite mehrfach profiliert ausgebildet ist. Eine zentrale, einem dynamischen Dichtungsbereich zugeordnete Dichtfläche 6 geht beidseitig abgestuft in zwei von der Außenumfangsfläche 7 beabstandete Absatzflächen 13 und 14 über, so dass sich Freiräume 15 und 16 ausbilden. Die Absatzflächen 13 und 14 sind jeweils über quer zur Außenumfangsfläche 7 verlaufende Schrägflächen 17 und 18 mit Seitenflächen 19 und 20 des Dichtrings 1 verbunden. Die Schrägflächen 17 und 18 schneiden sich mit den Seitenflächen 19 und 20 in Kanten 21 und 22. Die Absatzflächen 13 und 14 schneiden sich mit den Schrägflächen 17 und 18 in Kanten 23 und 24. Die Rückseite 25 des Dichtrings 1 liegt an dem Spannring 2 an. Der Dichtring 1 dichtet einen Spalt 26 zwischen den Maschinenteilen 4 und 5 ab. Erfindungsgemäß relevant sind zwei unterschiedliche Abstände d₁ und d₂ , der im vorliegenden Fall durch die Schrägfläche nicht konstant ist. Beispielsweise bei einer Ausbildung als Stufe wäre auch d₂ konstant.

**Fig. 2** zeigt den Dichtring 1 unter Druckbelastung von der Hochdruckseite H. Der Dichtring 1 wird in Pfeilrichtung 27 mit einem Druck P belastet. Über den Fluiddruck P wird der Dichtring 1 an die Nutflanke 11 gedrückt. Auf Grund der Profilgebung des Dichtrings 1 wird der Dichtring 1 zur Niederdruckseite N hin verschwenkt, so dass die Kante 23 an die Außenumfangsfläche 7 gedrückt ist. Es bildet sich ein geschlossener Ringraum 28 durch die Kante 23, die Absatzfläche 13 und die zentrale Dichtfläche 6. Die Kante 23 und die teilweise druckentlastete Dichtfläche 6 übernehmen die Funktion einer dynamischen Abdichtung. Der Dichtring 1 liegt flächenhaft über die Dichtfläche 6 und linienhaft über die Kante 23 an der Außenumfangsfläche 7 an. An der niederdruckseitigen Nutflanke 11 werden sowohl der Dichtring 1 als auch der Spannring 2 verpresst und liegen flächenhaft an. Die Schrägfläche 18 wird durch den Fluiddruck P angehoben. Die Rückseite 25 wird zum Spannring 2 gekrümmt. Die Beabstandung der Absatzfläche 14 zur Außenumfangsfläche 7 nimmt zu. Das Fluid kann unter die Absatzfläche 14 vordringen.

Je nach Größe der Druckbeaufschlagung (Fluiddruck P) ergeben sich eine unterschiedlich starke Verformung an der Nutflanke 11 und eine Anpressung oder Beabstandung an die Außenumfangsfläche 7.

Diese Verformung ist reversibel und bildet sich bei fallendem Druck zurück.

### BEZUGSZEICHENLISTE

- 1: Dichtring
- 2: Spannring
- 3: Nut
- 4: Maschinenteil
- 5: Maschinenteil
- 6: Dichtfläche
- 7: Außenumfangsfläche
- 8: Nutgrund
- 9: Berührungslinie
- 10: Berührungslinie
- 11: Nutflanke

- 13: Absatzfläche
- 14: Absatzfläche
- 15: Freiraum
- 1 6: Freiraum
- 17: Schrägfläche
- 18: Schrägfläche
- 19: Seitenfläche
- 20: Seitenfläche
- 21: Schnittlinie
- 22: Schnittlinie
- 23: Kante
- 24: Kante
- 25: Rückseite
- 26: Spalt
- 27: Pfeilrichtung
- 28: Ringraum
- d₁: Abstand zur Außenumfangsfläche
- d₂: Abstand zur Außenumfangsfläche

## Patentansprüche

1. Hochdruckdichtungsanordnung zum Abdichten eines Spalts (26) zwischen zwei zueinander konzentrischen, gegeneinander beweglichen Maschinenteilen (4, 5), bestehend aus einem ersten Maschinenteil (4) mit einer Nut (3), einem zweiten Maschinenteil (5) mit einer der Nut (3) gegenüberliegenden Außenumfangsfläche (7), einem in der Nut vorgesehenen Dichtring (1) aus einem extrusionsfesten Material und einem in der Nut vorgesehenen Spannring (2) aus einem elastomeren Werkstoff, wobei ein niederdruckseitiger Profilbereich des Dichtrings (1) unter Fluiddruckbeaufschlagung zur Außenumfangsfläche (7) auslenkbar ist, wobei sich die druckabhängige Auslenkung des Dichtrings (1) bei einer Druckerniedrigung selbsttätig in Richtung der Ausgangslage des Dichtrings (1) im drucklosen Zustand zurückbildet, wobei der Dichtring (1) - im Querschnitt und im drucklosen Zustand gesehen - eine profilierte der Außenumfangsfläche (7) zugewandte Dichtringfläche (6) aufweist, welche zumindest bezüglich des niederdruckseitigen Profilbereichs in eine von der Außenumfangsfläche (7) beabstandete Absatzfläche (13) mit einem ersten Abstand d₁ übergeht, welche wiederum in eine von der Außenumfangsfläche (7) stärker beabstandete Absatzfläche (13) Seitenfläche (20) mit einem zweiten Abstand d₂ übergeht, **dadurch gekennzeichnet, dass** eine mehrstufige Dichtringfläche ausgebildet ist, welche bei Hochdruckbelastung nach Verschwenken des Dichtrings auf der Außenumfangsfläche (7) des zweiten Maschinenteils (5) unter Ausbildung eines Ringraums (28) aufsetzen kann.

2. Hochdruckdichtungsanordnung nach Anspruch 1, **dadurch gekennzeichnet, dass** der Dichtring (1) unter Fluiddruckbeaufschlagung zur niederdruckseitigen Nutflanke (11) auslenkbar ist, wobei sich die druckabhängige Auslenkung des Dichtrings (1) bei einer Druckerniedrigung selbsttätig in Richtung der Ausgangslage des Dichtrings (1) im drucklosen Zustand zurückbildet, wobei der Dichtring (1) - im Querschnitt und im drucklosen Zustand gesehen - eine profilierte der Außenumfangsfläche (7) zugewandte Dichtringfläche (6) aufweist, welche beidseitig stufenförmig in zwei von der Außenumfangsfläche (7) beabstandete Absatzflächen (13, 14) übergeht, die wiederum über mindestens eine Kante (23, 24) in Seitenflächen (19, 20) übergehen.

3. Hochdruckdichtungsanordnung nach Anspruch 1 oder 2, **dadurch gekennzeichnet, dass** die Absatzflächen (13, 14) über quer zur Außenumfangsfläche verlaufende Schrägflächen (17, 18) in die Seitenflächen (19, 20) übergehen.

4. Verwendung der Hochdruckdichtungsanordnung nach Anspruch 1 oder 2 für Drehdurchführungen in der Hydraulik

## Claims

1. High-pressure sealing arrangement for sealing a gap (26) between two concentric machine parts (4, 5) consisting of a first machine part (4) with a groove (3), a second machine part (5) with an outer peripheral surface (7) opposite the groove (3), a sealing ring (1), provided in the groove, of an extrusion-resistant material and a tensioning ring (2), provided in the groove, of an elastomeric material, wherein a shaped section of the sealing ring (1) on the low-pressure side can be deflected towards the outer peripheral surface (7) under fluid pressure load, wherein, when the pressure decreases, the pressure-dependent deflection of the sealing ring (1) automatically returns towards the initial, unpressurized state of the sealing ring (1), wherein the sealing ring (1), viewed in cross-section and in the unpressurized state, has a shaped sealing ring surface (6) facing the outer peripheral surface (7), which merges at least with respect to the shaped section on the low-pressure side, into a shoulder surface (13) separated from the outer peripheral surface (7) with a first separation d₁, which merges into a side surface (20) with a second, larger separation d₂ from the outer peripheral surface (7), **characterized in that** a multi-stage sealing ring surface is formed which, in case of high-pressure load after pivoting of the sealing ring, can be placed on the outer peripheral surface (7) of the second machine part (5) thereby forming an annular space (28).

2. High-pressure sealing arrangement according to claim 1, **characterized in that** the sealing ring (1) can be deflected under fluid pressure load towards the grooved edge (11) on the low pressure side, wherein the pressure-dependent deflection of the sealing ring (1) automatically returns towards the initial, unpressurized state of the sealing ring (1), when the pressure is reduced, wherein the sealing ring (1), viewed in cross-section and in the unpressurized state, has a shaped sealing ring surface (6) facing the outer peripheral surface (7) which merges on both sides in steps into two shoulder surfaces (13, 14) separated from the outer peripheral surface (7) which again merge into side surfaces (19, 20) via at least one edge (23, 24).

3. High-pressure sealing arrangement according to claim 1 or 2, **characterized in that** the shoulder surfaces (13, 14) merge into side surfaces (19, 20) via inclined surfaces (17, 18) which extend transversely to the outer peripheral surface.

4. Use of the high-pressure sealing arrangement according to claim 1 or 2 for rotary transmission in hydraulics.

## Revendications

1. Système de garniture d'étanchéité sous haute pression destiné à assurer l'étanchéité d'une fente (26) entre deux éléments de machine (4, 5) agencés concentriquement l'un à l'autre et mobiles l'un par rapport à l'autre, comportant un premier élément de machine (4) avec une rainure (3), un deuxième élément de machine (5) avec une face périphérique extérieure (7) en regard de la rainure (3), une bague d'étanchéité (1) en matériau résistant à l'extrusion prévue dans la rainure et une bague de serrage (2) en matériau élastomère prévue dans la rainure, une zone profilée de la bague d'étanchéité (1) du côté basse pression pouvant être déviée vers la surface périphérique extérieure (7) sous l'effet de pression exercée par un fluide, la déviation de la bague d'étanchéité (1), en fonction de la pression, revenant en cas de baisse de pression automatiquement vers la position initiale de la bague d'étanchéité (1) à l'état non pressurisé, la bague d'étanchéité (1) - par référence à sa section transversale et à l'état non pressurisé - ayant une face d'étanchéité (6) profilée, qui est orientée vers la surface périphérique extérieure (7) et qui se prolonge au moins par rapport à la zone profilée du côté basse pression par une surface en retrait (13) écartée de la surface périphérique extérieure (7) avec une première distance (d₁), laquelle se prolonge elle-même par une surface latérale (20) davantage écartée de la surface périphérique extérieure (7) avec une deuxième distance (d₂), **caractérisé en ce qu'**il est formé une surface de bague d'étanchéité à plusieurs niveaux, laquelle, en cas de sollicitation par une haute pression, peut reposer après pivotement de la bague d'étanchéité sur la surface périphérique extérieure (7) du deuxième élément de machine (5) en formant un espace annulaire (28).

2. Système de garniture d'étanchéité sous haute pression selon la revendication 1, **caractérisé en ce que** la bague d'étanchéité (1), sous l'effet d'une pression exercée par un fluide, peut dévier vers le flanc de rainure (11) du côté basse pression, la déviation de la bague d'étanchéité (1), en fonction de la pression, revenant en cas de baisse de pression automatiquement vers la position initiale de la bague d'étanchéité (1) à l'état non pressurisé, la bague d'étanchéité (1) - par référence à sa section transversale et à l'état non pressurisé - ayant une face d'étanchéité (6) profilée, qui est orientée vers la surface périphérique extérieure (7) et qui se prolonge des deux côtés en forme de gradins par deux surfaces en retrait (13, 14) écartées de la surface périphérique extérieure (7), lesquelles se prolongent elles-mêmes par des surfaces latérales (19, 20) par l'intermédiaire d'au moins une arête (23, 24).

3. Système de garniture d'étanchéité sous haute pression selon la revendication 1 ou 2, **caractérisé en ce que** les surfaces en retrait (13, 14) se prolongent par des surfaces latérales (19, 20) par l'intermédiaire de surfaces inclinées (17, 18) transversales à la surface périphérique extérieure.

4. Utilisation du système de garniture d'étanchéité sous haute pression selon la revendication 1 ou 2 pour des passages de rotation dans le système hydraulique.
